## Europäisches Patentamt
## European Patent Office
## Office européen des brevets

(19)

(11) Veröffentlichungsnummer: **0 065 251**
**B1**

(12) **EUROPÄISCHE PATENTSCHRIFT**

(45) Veröffentlichungstag der Patentschrift:
05.12.84

(21) Anmeldenummer: **82104032.6**

(22) Anmeldetag: **10.05.82**

(51) Int. Cl.³: **H 01 B 1/12, C 08 G 61/12**

(54) Poly(2,5-thiophendiyl)-arsenpentafluorid-Komplexe.

(30) Priorität: **16.05.81 DE 3119593**

(43) Veröffentlichungstag der Anmeldung:
**24.11.82 Patentblatt 82/47**

(45) Bekanntmachung des Hinweises auf die Patenterteilung:
**05.12.84 Patentblatt 84/49**

(84) Benannte Vertragsstaaten:
**CH DE FR GB IT LI NL**

(56) Entgegenhaltungen:
**JOURNAL OF POLYMER SCIENCE, Band 18, Nr. 1, Januar 1980, Seiten 9-12, John Wiley & Sons, Inc., New York, USA "Preparation of thermostable and electric-conducting poly (2,5-thienylene)"**
**DIE MAKROMOLEKULARE CHEMIE - RAPID COMMUNICATIONS, Band 2, 1981, Seiten 551-555, Heidelberg, DE. G. KOSSMEHL et al.: "Electrical conductivity of poly (2,5-thiophenediyl)-AsF5-complexes"**

(73) Patentinhaber: **BAYER AG, Konzernverwaltung RP Patentabteilung, D-5090 Leverkusen 1 Bayerwerk (DE)**

(72) Erfinder: **Kossmehl, Gerhard, Prof. Dr., Grabenstrasse 38 f, D-1000 Berlin 45 (DE)**
Erfinder: **Chatzitheodorou, Georg, Dr., Bitscher Strasse 4, D-1000 Berlin 33 (DE)**

**Beschreibung**

Gegenstand der Erfindung ist Poly(2,5-thiophendiyl), das mit Arsenpentafluorid dotiert ist, und ein Verfahren zur Herstellung dieses Produktes.

Poly(2,5-thiophendiyl) ist bekannt; es kann gemäss „Journal Polymer Sci., Polymer Letters", *18*, 8 (1980), durch Umsetzung von 2,5-Dibromthiophen mit Magnesium in Gegenwart von Nickelchlorid in absolutem Tetrahydrofuran erhalten werden. Die Dotierung dieses Produktes mit Arsenpentafluorid ist neu. Man erhält den Komplex mit Arsenpentafluorid, wenn man gasförmiges Arsenpentafluorid bei Zimmertemperatur, d.h., bei etwa +10 bis +30°C in Abwesenheit von Luft, im wesentlichen also bei Abwesenheit von Sauerstoff und Feuchtigkeit, bei Drucken von 10 Pa (0,1 mbar) bis zu Atmosphärendruck für eine Zeit von wenigen Minuten bis zu mehreren Tagen auf das feste Poly-(2,5-thiophendiyl) einwirken lässt.

Statt von Poly(2,5-thiophendiyl) auszugehen, kann man – und dies ist bevorzugt – Thiophen oder 2,2'-Dithienyl oder Mischung aus diesen unter den oben angegebenen Bedingungen mit Arsenpentafluorid behandeln.

Man erhält in allen Fällen schwarze unlösliche polymere Komplexe (in Form von Pulvern oder auch Filmen an den Gefässwänden), die bis 360°C nicht schmelzen, und die eine elektrische Leitfähigkeit von bis zu $\sigma$ 298 K = 0,02 $\Omega^{-1} \cdot cm^{-1}$ (gemessen bei P = 1500 Kp.$\cdot cm^{-2}$ im Bereich von 20 bis 120°C) besitzen (zur Messmethode vgl. J. Danhäuser, G. Manecke, Makromol. Chem., *84*, 238 [1964]).

*Beispiele*

1. *Ausgangsprodukte*
   1 = Poly(2,5-thiophendiyl), erhalten aus 2,5-Dibromthiophen gemäss „J. Polymer Sci., Polymer Letters", *18*, 8 (1980)
   Elektrische Leiftfähigkeit $\sigma$ 298 K = 5,7 $\cdot$ $10^{-11}$ $\Omega^{-1} \cdot cm^{-1}$ (vgl. Tabelle 1, Nr. 1)
   2 = 2,2'-Dithienyl
   3 = Thiophen

2. *Herstellungsverfahren*

Das Ausgangsmaterial wurde in ein Vakuum gebracht und Arsenpentafluorid bei Raumtemperatur unter den in der Tabelle 1 angegebenen Drukken für die dort angegebenen Zeiten einwirken gelassen. Erhalten wurden in allen Fällen schwarze Komplexe mit Schmelzpunkten über 360°C, deren elektrische Daten in der Tabelle 1 angegeben sind:
Elektrische Leitfähigkeit bei 298 K
Aktivierungsenergie in Elektronenvolt

*Tabelle 1:*

*Poly(2,5-thiophendiyl)-AsF₅-komplexe*

| Nr. | Ausgangsmaterial | AsF₅, Druck Pa (Torr) | Zeit (h) | $\sigma$ 298 K ($\Omega^{-1} \cdot cm^{-1}$) | $\sigma$ ($\Omega^{0-1} \cdot cm^{-1}$) | E (eV) | |
|-----|-----|-----|-----|-----|-----|-----|-----|
| 1 | 1 | — | — | $5,7 \cdot 10^{-11b}$ | $2,4 \cdot 10^{-5}$ | 0,66 | |
| 2 | 1 | 53,3 (40) | 24 | $5,9 \cdot 10^{-8}$ | $2,7 \cdot 10^{+1}$ | 1,02 | |
| 3 | 1 | 266,5 (200) | 24 | $5,4 \cdot 10^{-4}$ | $6,4 \cdot 10^{-1}$ | 0,36 | |
| 4 | 1 | 599,7 (450) | 24 | $1,4 \cdot 10^{-3}$ | $1,6 \cdot 10^{-1}$ | 0,24 | |
| 5 | 2 | 599,7 (450) | 60 | $7,1 \cdot 10^{-4}$ | $2,9 \cdot 10^{-2}$ | 0,19 | |
| 6 | 2 | 866,2 (650) | 24 | $5,5 \cdot 10^{-4}$ | $5,0 \cdot 10^{-3}$ | 0,11 | |
| 7 | | 866,2 (650) | 24 | $1,7 \cdot 10^{-3}$ | $2,5 \cdot 10^{-2}$ | 0,14 | = Nr. 6, behandelt mit NH₄OH und noch einmal dotiert mit AsF₅ |
| 8ª | 2 | 599,7 (450) | 60 | $1,5 \cdot 10^{-5}$ | $5,2 \cdot 10^{-2}$ | 0,42 | |
| 9 | 3 | 266,5 (200) | 24 | $6,9 \cdot 10^{-8}$ | $1,9 \cdot 10^{0}$ | 0,88 | |
| 10 | 3 | 399,8 (300) | 24 | $6,5 \cdot 10^{-7}$ | $1,7 \cdot 10^{-2}$ | 0,52 | |
| 11 | | | | $1,2 \cdot 10^{-15}$ | $6,6 \cdot 10^{+1}$ | 1,98 | = Nr. 10,3 d mit H₂O behandelt |
| 12 | 3 | 599,7 (450) | 60 | $2,1 \cdot 10^{-2}$ | $4,8 \cdot 10^{-2}$ | 0,04 | |
| 13 | 3 | 866,2 (650) | 48 | $7,4 \cdot 10^{-4}$ | $2,2 \cdot 10^{-2}$ | 0,17 | |
| 14ª | 3 | 866,2 (650) | 48 | $1,1 \cdot 10^{-3}$ | $2,2 \cdot 10^{-3}$ | 0,04 | |

ª An den Gefässwänden bildete sich ein Film (Nr. 8 = 0,0046 cm Dicke; Nr. 14 = 0,004 cm Dicke).

b $\sigma$ 29 K = $5,3 \cdot 10^{-11}$ $\Omega^{-1} \cdot cm^{-1}$ (vgl. T. Yamamoto, K. Sanechika, A. Yamamoto, „J. Polymer Sci., Polymer Letters", *18*, 8 [1980]).

**Patentansprüche**

1. Mit Arsenpentafluorid dotiertes Poly(2,5-thiophendiyl).

2. Verfahren zur Herstellung von mit Arsenpentafluorid dotiertem Poly(2,5-thiophendiyl), dadurch gekennzeichnet, dass man Poly(2,5-thiophendiyl) oder 2,2'-Dithienyl oder Thiophen oder Mischungen aus 2,2'-Dithienyl und Thiophen bei Abwesenheit von Luft bei +10 bis +30°C und bei Drucken von 10 Pa (0,1 mbar) bis zu Atmosphärendruck und Zeiten bis zu mehreren Tagen mit gasförmigem Arsenpentafluorid behandelt.

**Revendications**

1. Poly-(2,5-thiophènediyle) additionné de pentafluorure d'arsenic.

2. Procédé pour la fabrication de poly-(2,5-thiophènediyle) additionné de pentafluorure d'arsenic, caractérisé en ce que l'on traite le poly-(2,5-thiophènediyle) ou le 2,2'-dithiényle, le thiophène ou des mélanges de 2,2'-dithiényle et de thiophène, par le pentafluorure d'arsenic gazeux en absence d'air, à +10 à +30°C et sous des pressions de 10 Pa (0,1 mbar) jusqu'à la pression atmosphérique, pendant des durées allant jusqu'à plusieurs jours.

**Claims**

1. Poly-(2,5-thiophenediyl) doped with arsenic pentafluoride.

2. Process for the preparation of poly-(2,5-thiophenediyl) doped with arsenic pentafluoride, characterised in that poly-(2,5-thiophenediyl) or 2,2'-dithienyl or thiophene, or mixtures of 2,2'-dithienyl and thiophene, is/are treated with gaseous arsenic pentafluoride in the absence of air, at +10 to +30°C and under pressures of from 10 Pa (0.1 mbar) to atmospheric pressure, and for periods of up to several days.